# EUROPEAN PATENT APPLICATION

(11) **EP 2 902 899 A1**
(43) Date of publication of application: **05.08.2015**
(21) Application number: 14197913.8
(22) Date of filing: 15.12.2014
(51) Int. Cl.: G06F 3/06

(54) **Storage control apparatus, storage apparatus, and control program**

(30) Priority: 31.01.2014 JP 2014017250
(71) Applicant: FUJITSU LIMITED, Kawasaki-shi, Kanagawa 211-8588 (JP)
(72) Inventor: Yoshida, Akimasa, Kanagawa, 211-8588 (JP); Kobashi, Kazunori, Kanagawa, 211-8588 (JP); Tsuge, Kenji, Kanagawa, 211-8588 (JP); Yamashita, Hiroyuki, Kanagawa, 211-8588 (JP)
(74) Representative: Hoffmann Eitle

(57) **Abstract**

A storage control apparatus configured to control a storage in a storage apparatus includes memory configured to store assignment information that includes an assignment state of memory areas of the storage; and a processor configured to obtain performance information that indicates response performance for accessing the storage, and configured to control based on the obtained performance information, execution of an initialization process for a memory area in the storage, identified by the assignment information, and subject to initialization.

## Description

### FIELD

The embodiments discussed herein are related to a storage control apparatus, a storage apparatus, and a control program.

### BACKGROUND

Conventionally, a so-called virtual storage apparatus is present as a storage system that can realize a memory apparatus having unrestricted volume configuration and memory capacity without the limitations of the volume configuration or memory capacity of a physical memory apparatus. A virtual storage apparatus has a storage unit that controls access to an internal physical memory apparatus and creates virtual volumes by a processor that manages the storage unit.

Virtual volumes are created by an internal processor of the virtual storage apparatus and are correlated with physical memory areas on the storage unit. When an unnecessary volume is deleted, the segments forming the volume are released. In this case, if the released segment is reused for another volume, a zero initialization process of overwriting all data of the segments to "0" is performed with respect to the storage unit to prevent previous data from being read.

According to a related technology, for example, from among server apparatuses that control virtual servers, a server having a low load is selected as a server apparatus that erases information stored on a virtual disk assigned to a virtual server that is to be deleted. For example, refer to Japanese Laid-Open Patent Publication No. 2009-104530.

Nonetheless, with the convention technology, access concentrates at the storage unit consequent to the zero initialization process for the storage unit, inviting drops in response performance for input/output (I/O) requests from a business server, etc.

### SUMMARY

It is an object in one aspect of the embodiments to at least solve the above problems in the conventional technologies.

According to an aspect of an embodiment, a storage control apparatus configured to control a storage unit in a storage apparatus includes memory configured to store assignment information that includes an assignment state of memory areas of the storage unit; and a processor configured to obtain performance information that indicates response performance for accessing the storage unit, and configured to control based on the obtained performance information, execution of an initialization process for a memory area in the storage unit, identified by the assignment information, and subject to initialization.

### BRIEF DESCRIPTION OF DRAWINGS

FIG. 1 is a diagram depicting an example of a control method according to a first embodiment;
FIG. 2 is a diagram depicting an apparatus configuration example of a storage apparatus 100 according to a second embodiment;
FIG. 3 is a block diagram of an example of a hardware configuration of PU#1, etc.;
FIG. 4 is a diagram depicting an example of cascade topology of SWs in the storage apparatus 100;
FIG. 5 is a diagram depicting an example of configuration of a VDISK;
FIG. 6 is a diagram depicting one example of the contents of a volume segment table 600;
FIG. 7 is a diagram depicting an example of segment state transition;
FIG. 8 is a diagram depicting an example of the contents of a SW group management table 800;
FIG. 9 is a diagram depicting an example of updating of the SW group management table 800;
FIG. 10 is a diagram depicting one example of the contents of an asynchronous process management table 1000;
FIG. 11 is a diagram depicting a transition example of the status of a zero initialization process;
FIG. 12 is a block diagram of an example of a functional configuration of PU#1;
FIG. 13 is a diagram (part 1) depicting an example of updating of the asynchronous process management table 1000;
FIG. 14 is a diagram (part 2) depicting an example of updating of the asynchronous process management table 1000;
FIG. 15 and FIG. 16 are flowcharts depicting an example of a procedure of the asynchronous process control process by the storage apparatus 100; and
FIG. 17 and FIG. 18 are flowcharts depicting an example of a procedure of the asynchronous process of the storage apparatus 100.

### DESCRIPTION OF EMBODIMENTS

Embodiments of a storage control apparatus, a storage apparatus, and a control program will be described in detail with reference to the accompanying drawings. In the present specification, the storage control apparatus may be indicated as a "processor unit (PU)", a storage unit may be indicated as a storage unit (SU)", and a switch may be indicated as a "switch (SW)".

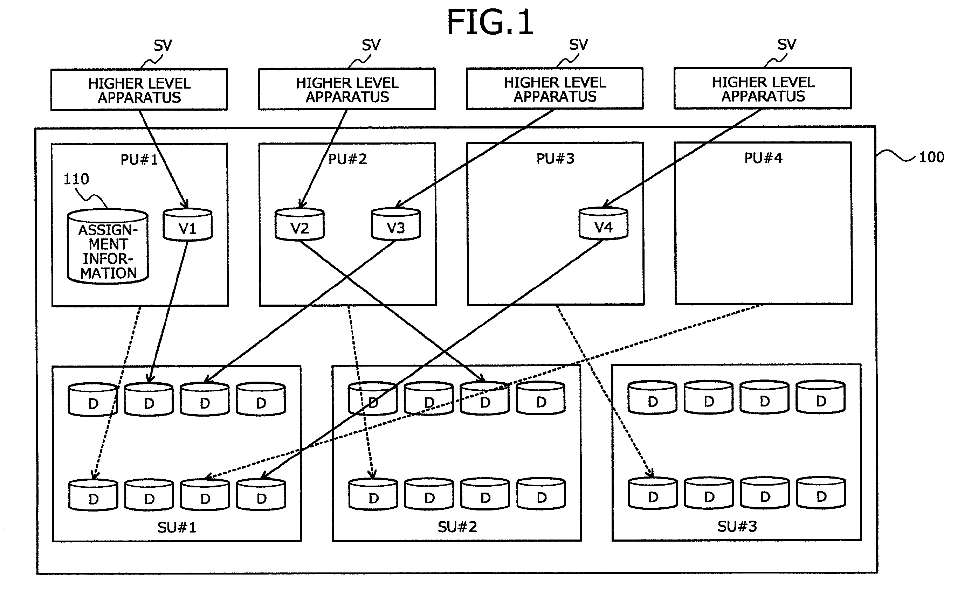

FIG. 1 is a diagram depicting an example of a control method according to a first embodiment. In FIG. 1, a storage apparatus 100 includes PU#1 to PU#4, and SU#1 to SU#3. Here, PU#1 to PU#4 are computers that control each subordinate SU#1 to SU#3.

PU#1 to PU#4 receive access for the subordinate SU#1 to SU#3, from a higher level apparatus SV and process the received access. Further, PU#1 operates as a master control unit managing other PUs (e.g., PU#2 to PU#4) in the storage apparatus 100 and controlling the storage apparatus overall.

The higher level apparatus SV, for example, is a business server that uses the storage apparatus 100, a management server that manages the storage apparatus 100, etc. A business server is a computer in which a business application is installed. A management server is a computer that is used by a manager of the storage apparatus 100.

SU#1 to SU#3 respectively have storage, and are computers that respectively control access to the storage. Storage includes one or more memory apparatuses D. A memory apparatus D may be a physical memory apparatus such as a hard disk, an optical disk, flash memory, magnetic tape, and the like or a logical memory apparatus such as a logical unit number (LUN).

Here, for example, the storage apparatus 100 performs data access by wide striping. Wide striping is a technique of distributing data access for one volume to multiple LUNs and performing access in units called strips, which are of a fixed length. Wide striping suppresses performance drops caused by local access concentration and enables stable performance to be ensured without a complicated performance design that takes the volume of access to the storage apparatus 100 by the business server and the physical location of the volumes into consideration.

A volume (in the example depicted in FIG. 1, volumes V1 to V4) is a memory area, which is the unit by which the storage apparatus 100 is managed, and is realized by memory apparatuses D in SU#1 to SU#3. A volume, for example, may group multiple physical memory apparatuses or partitions in a memory apparatus (e.g., hard disk) to be a logical volume that is virtually one volume.

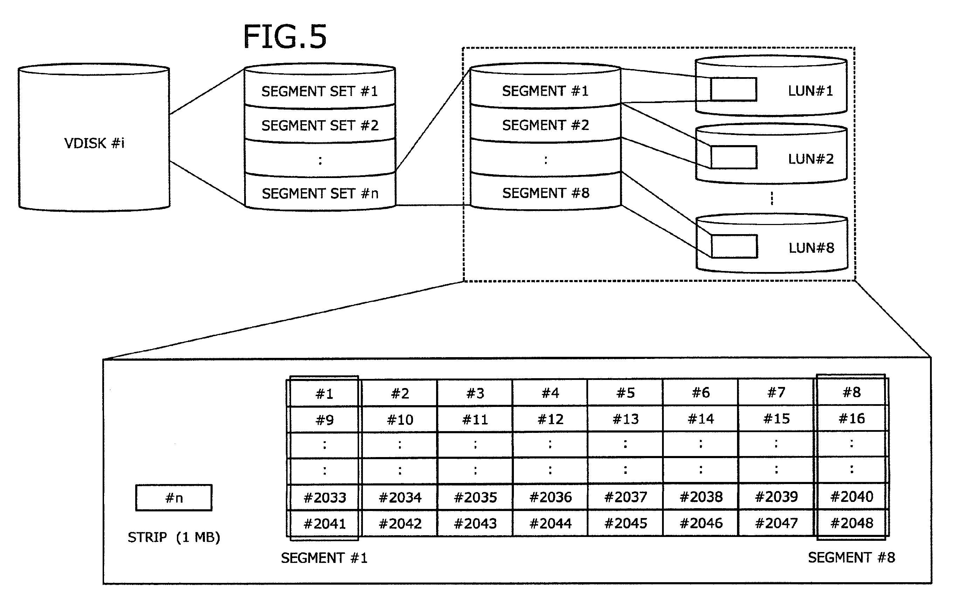

Although a detailed description will be given with reference to FIG. 5, a volume, for example, is an aggregate of multiple segment sets; and each segment set is an aggregate of multiple segments. A segment is a memory area that is the unit that is specified by a given capacity and by which memory is managed. For example, a segment is managed by position information such as a record/reproduce instruction address (logical block addressing (LBA)) from the higher level apparatus SV to a volume.

Further, when an unnecessary volume is deleted, the segments forming the volume are released. When segments are released, an initialization process is performed with respect to the memory area to which the segments were assigned. The initialization process is, for example, a process of overwriting all data of the segments to "0".

Therefore, if the segments released accompanying the deletion of an unnecessary volume are to be reused for another volume, the reading of previous data can be prevented. Hereinafter, description will be given taking a "zero initialization process" of overwriting all data of the segments as one example of the initialization process.

In the storage apparatus 100, when volumes are created, by wide striping, segments forming a volume are distributed to all SUs and the utilization rate is equalized for the SUs overall. Nonetheless, when a volume is created, information concerning the frequency at which the volume will be accessed and which address of the volume will be frequently accessed is unknown.

Therefore, after actual operation begins, access may concentrate a particular SU. In the example depicted in FIG. 1, access is concentrating at SU#1, among SU#1 to SU#3 in the storage apparatus 100. In this case, if the zero initialization process is performed with respect to a memory area in SU#1, access will further concentrate at SU#1, inviting drops in the response performance for an I/O request from the business server. In FIG. 1, solid-lined arrow pointing to SUs represent access corresponding to an I/O request from the business server and dotted-lined arrows pointing to SUs represent access corresponding to the zero initialization process.

Thus, in the present embodiment, the storage apparatus 100 monitors the response performance of each SU during operation and according to the response performance of the SUs, controls the execution of the zero initialization process with respect to memory areas in the SUs. Hereinafter, an example of a control process of the storage apparatus 100 will be described.

In the description hereinafter, among the SUs (e.g., SU#1 to SU#3) in the storage apparatus 100, an arbitrary SU may be indicated as "SU#i" (i=1, 2, ...). Further, among the PUs (e.g., PU#1 to PU#4) in the storage apparatus 100, an arbitrary PU may be indicated as "PU#j" (j=1, 2, ...).
(1) PU#1 obtains performance information for SU#i. Here, the performance information for SU#i is information indicating the response performance for accessing SU#i and, for example, is information specifying a response time for accessing SU#i.
(2) PU#1 controls, according to the obtained performance information for SU#i, execution of the zero initialization process with respect to a memory area in SU#i, identified by assignment information 110, and subject to zero initialization. Here, the assignment information 110 is information that includes the assignment state of the memory areas of SU#i and, for example, is information that indicates to which memory area in SU#i, each segment forming a volume is assigned.

For example, PU#1 refers to the assignment information 110 and identifies in SU#i, a memory area that is to be subject to zero initialization. The memory area to be subject to zero initialization, for example, is a memory area to which segments forming an unnecessary volume are assigned. According to the performance information for SU#i, PU#1 controls the execution of the zero initialization process with respect to the identified memory area that is in SU#i and to be subject to zero initialization.

For example, if the response time that is for accessing SU#i and identified by the performance information for SU#i is less than a threshold T1, PU#1 performs control to start execution of the zero initialization process with respect to the memory area that is in SU#i and to be subject to zero initialization. Here, if the response time for accessing SU#i is less than the threshold T1, the frequency of accessing SU#i is low and therefore, the threshold T1 is set to a value that enables determination that the load on SU#i is low.

Further, for example, during the zero initialization process for SU#i, if the response time for accessing SU#i and identified by the performance information for SU#i exceeds a threshold T2, PU#1 performs control to terminate the execution of the zero initialization process in progress. Here, the threshold T2 is a value that is greater than the threshold T1. If the response time for accessing SU#i exceeds the threshold T2, the frequency of accessing SU#i is high and therefore, the threshold T2 is set to a value that enables determination that the load on SU#i is high and the response performance for an I/O request from the higher level apparatus SV may drop.

Thus, PU#1 obtains performance information indicating the response performance for accessing SU#i and enables the execution of the zero initialization process for a memory area that is in SU#i and subject to zero initialization, to be controlled according to the obtained performance information.

Consequently, an asynchronous process (zero initialization process) executed internally based on volume access characteristics that become clearer after the start of actual operation can be controlled. As a result, the effect of I/O requests from the higher level apparatus SV, such as a business server, on internal processing is suppressed, enabling stable access performance to be provided to the higher level apparatus SV.

Further, increases in the capacity made available by the release of segments in all SUs at the same time can be prevented. As a result, the next time a volume is created, segments from all SUs are equally distributed, whereby further increases in the frequency of access of an SU (in the example depicted in FIG. 1, SU#1) at which access concentrates can be prevented.

In the example depicted in FIG. 1, although a case where the storage apparatus 100 includes four PUs is described, provided that one or more is included, any number of PUs may be included. Further, in the example depicted in FIG. 1, although a case where the storage apparatus 100 includes three SUs is described, provided that one or more is included, any number of SUs may be included.

The storage apparatus 100 according to a second embodiment will be described. In the second embodiment, a case where the storage apparatus 100 described in the first embodiment is applied to a scaleout storage system will be described. Description of portions identical to those described in the first embodiment will be omitted.

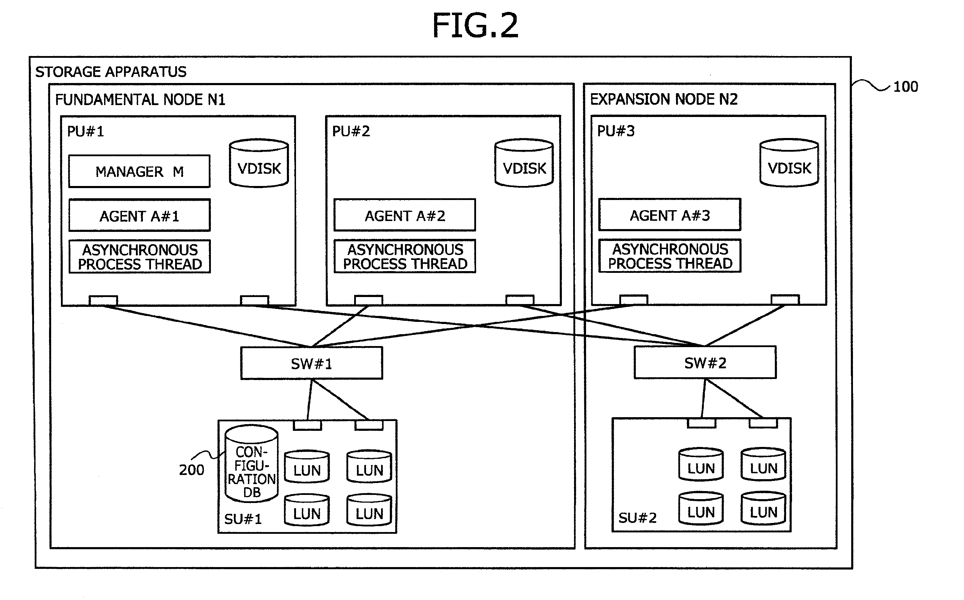

FIG. 2 is a diagram depicting an apparatus configuration example of the storage apparatus 100 according to the second embodiment. In FIG. 2, the storage apparatus 100 is a storage system that can expand the memory area of the storage apparatus overall, according to increases in the demanded memory capacity. For example, the storage apparatus 100 can expand the memory area of the storage apparatus overall taking PU and SU as one set.

In the description hereinafter, the addition of one expansion set including a PU and SU to the storage apparatus 100 may be indicated as "scaleout" and a PU and SU pair may indicated as a "node". Nonetheless, in the fundamental configuration of the storage apparatus 100, a case where two PUs are connected to one SU is assumed for redundancy.

In the example depicted in FIG. 2, the storage apparatus 100 includes a base node N1 and an expansion node N2. The base node N1 has PU#1, PU#2, and SU#1. The expansion node N2 has PU#3 and SU#2. In other words, the expansion node N2, which is an expansion set is added to the base node N1, which is of the fundamental configuration, and the storage apparatus 100 is scaled out.

When the expansion node N2 is added, PU#1 is clustered with other PUs. In the example depicted in FIG. 2, a cluster is formed by PU#1, PU#2, and PU#3. Further, when the expansion node N2 is added, PU#1 puts the added SU#2 into a usable state and expands the memory capacity of the storage apparatus overall.

When the added SU#2 is connected and put into an accessible state, PU#1 and PU#2 further manage SU#2 as a subordinate SU. Furthermore, when SU#1 and SU#2 are connected and put into an accessible state, PU#3 manages SU#1 and SU#2 as subordinate SUs.

Here, PU#1 has a manager M and an agent A#1, and can access a configuration DB 200 in SU#1. Further, PU#2 and PU#3 respectively have agents A#2 and A#3. The manager M resides in a PU (in the example depicted in FIG. 2, PU#1) in the storage apparatus 100, manages and updates VDISK configuration information, and controls the agents A#1 to A#3.

A VDISK is a virtual volume provided by the storage apparatus 100 and is created on PU#1 to PU#3. A configuration example of a VDISK will be described hereinafter with reference to FIG. 5. VDISK configuration information is managed using the configuration DB 200.

The configuration DB 200 stores VDISK configuration information. The VDISK configuration information includes, for example, information (e.g., corresponds to the assignment information 110 depicted in FIG. 1) that indicates to which LUN in the SU, segments forming the VDISK (volume) are assigned. Storage contents of the configuration DB 200 will be described with reference to

FIGs. 6 and 8.

The agents A#1 to A#3 perform driver control together with monitoring events such as errors and giving notification to the manager M. Further, the agent A#1 to A#3, under the control of the manager M, generate an asynchronous process thread and execute an asynchronous process. The asynchronous process is the zero initialization process of overwriting all of the data of the segments to "0".

Further, in the storage apparatus 100, PU#1 to PU#3 and SU#1 and SU#2 are connected to have full mesh topology via the redundant SW#1 and SW#2. SW#1 and SW#2 are computers having a switching function. SW#1 and SW#2 select a path (port) that corresponds to the destination of received data and relay the data.

Thus, access from all the PUs in the storage apparatus 100 to all the SUs becomes possible, enabling fallback operation when failure occurs such as PU malfunction. Fallback operation is the continuance of operation during a state where performance and/or function is partially suspended when a failure occurs in the system.

Nonetheless, the number of ports that each SW has is finite and the number of PUs and SUs that can be connected to each SW is limited. Therefore, in the storage apparatus 100, when scaleout is repeatedly performed and the SW ports become insufficient, the SWs are increased. In this case, in the storage apparatus 100, SWs are connected to have cascade topology, whereby full mesh topology of the PUs and SUs is realized.

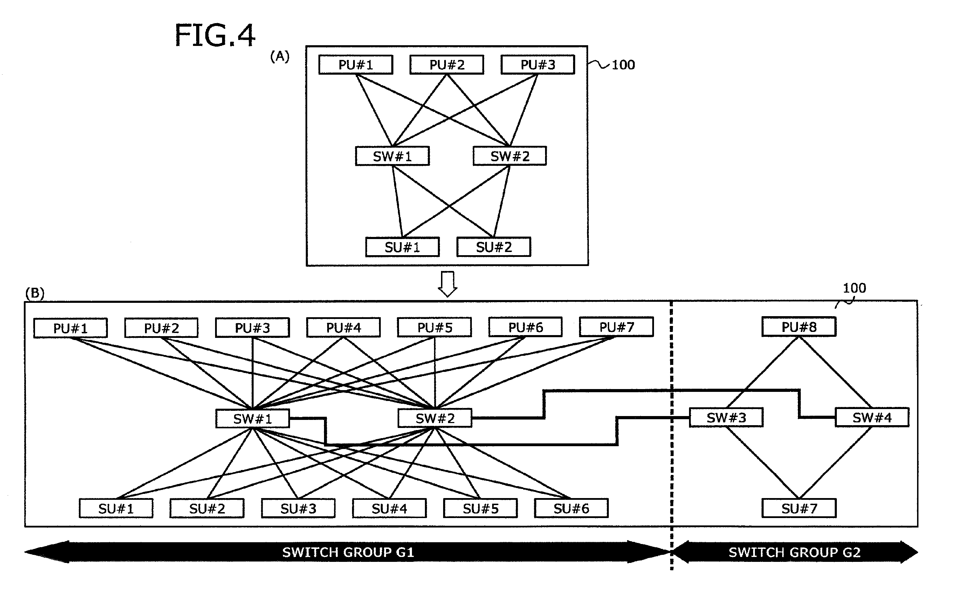

Cascade topology is topology in which multiple SWs are serially connected to enable an even greater number of devices (e.g., PU and SU) to be connected. An example of the cascade topology of the SWs in storage apparatus 100 will be described hereinafter with reference to FIG. 4.

Further, in the storage apparatus 100, if PU#1 fails, for example, PU#2 or PU#3 takes over the function of PU#1. Further, although not depicted, PU#1 to PU#3 are connected, for example, via a management LAN, to a management server, which is the higher level apparatus SV (refer to FIG. 1). Further, PU#1 to PU#3 are connected, via an I/O LAN, to business server, which is the higher level apparatus SV (refer to FIG. 1).

An example of a hardware configuration of a computer configuring PU#1 to PU#3, SU#1, SU#2, and SW#1 and SW#2 depicted in FIG. 2 (here, simply "PU#1, etc.") will be described.

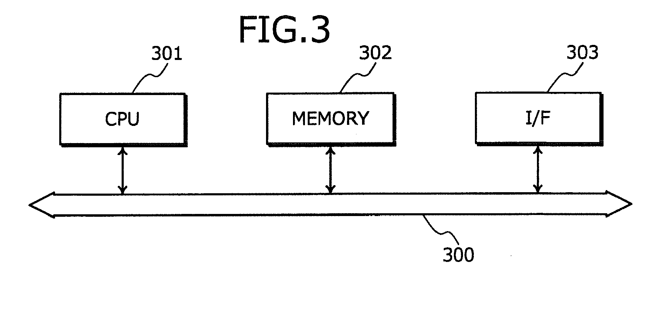

FIG. 3 is a block diagram of an example of a hardware configuration of PU#1, etc. In FIG. 3, PU#1, etc. has a central process unit (CPU) 301, memory 302, and an interface (I/F) 303, respectively connected by a bus 300.

Here, the CPU 301 governs overall control of PU#1, etc. The memory 302 includes, for example, read-only memory (ROM), random access memory (RAM), and flash ROM. For example, flash ROM stores programs such an operating system (OS) and firmware; ROM stores application programs; and RAM is used as work area of the CPU 301. Programs stored in the memory 302 are loaded onto the CPU 301, whereby coded processes are executed by the CPU 301.

The I/F 303 controls the input and output of data from other computers. For example, the I/F 303 is connected, via a communications line, to a network such as a local area network (LAN), a wide area network (WAN), and the Internet; and is connected to other computer through this network. The I/F 303 administers an internal interface with the network to control the input and output of data from other computers.

An example of the cascade topology of the SWs in the storage apparatus 100 will be described.

FIG. 4 is a diagram depicting an example of the cascade topology of the SWs in the storage apparatus 100. In FIG. 4, (A) the storage apparatus 100 includes PU#1 to PU#3, SU#1, SU#2, SW#1, and SW#2.

As described, in the storage apparatus 100, when scaleout is repeatedly performed and the SW ports become insufficient, the SWs are increased. Here, a case is assumed where a SW is specified to have 24 ports; a SU and a SW are physically connected by two cables.

In this case, if scaleout proceeds from the state depicted in (A) of FIG. 4, from a 7-node configuration, the ports of SW#1 and SW#2 become insufficient and therefore, SW#3 and SW#4 are added. In this case, in the storage apparatus 100, by connecting the SWs to have cascade topology, full mesh topology of the PUs and SUs is realized.

In the example (B) depicted in FIG. 4, SW#1 and SW#3 are connected to have cascade topology; and SW#2 and SW#4 are connected to have cascade topology. SW#1 and SW#2 are disposed for redundancy and thus, SW#1 and SW#2 are not connected to have cascade topology; and similarly, for SW#3 and SW#4.

In the storage apparatus 100 of (B) in FIG. 4, for example, when PU#1 performs the zero initialization process for the segments in SU#7, paths between the SWs in the cascade topology are used to access data on SU#7. The bandwidth of these paths is the same as the bandwidth of the paths between a PU and SU and therefore, when data transmission coming and going between SWs increases consequent to the zero initialization process, access performance to the SU drops.

Thus, PU#1 groups the PUs and SUs directly connected to each SW, and for each group (hereinafter, "switch group G"), causes a PU that belongs to the switch group G to execute the zero initialization process with respect to the segments that are to be initialized and in a SU that belongs to the switch group G. As a result, increases in data transmissions coming and going between SWs consequent to the zero initialization process are prevented.

In the example (B) in FIG. 4, as a switch group G1, PU#1 groups PU#1 to PU#7 and SU#1 to SU#6, which are directly connected to SW#1 (SW#2). Further, as a switch group G2, PU#1 groups PU#8and SU#7, which are directly connected to SW#3 (SW#4).

PU#1 causes a PU that belongs to the switch group G1 to execute the zero initialization process with respect to the segments that are to be initialized and in a SU that belongs to the switch group G1. Further, PU#1 causes a PU that belongs to the switch group G2 to execute the zero initialization process with respect to the segments that are to be initialized and in a SU that belongs to the switch group G2.

Thus, even if SWs are connected to form cascade topology accompanying scaleout of the storage apparatus 100, when the zero initialization process is executed, cascade paths between the SWs are not used, enabling drops in the access performance to the SU to be prevented.

FIG. 5 is a diagram depicting an example of configuration of a VDISK. In FIG. 5, VDISK #i is an aggregation of segment sets #1 to #n (i: positive integer; n: positive integer of 2 or more). Each segment set #1 to #n is an aggregation of eight segments #1 to #8. The capacity of each segment set #1 to #n is, for example, 2 [GB] and the capacity of each segment #1 to #8 is, for example, 256 [MB].

Taking the storage apparatus 100 depicted in FIG. 2 as an example, the segments #1 to #8 are equally distributed and assigned to LUNs in SU#1 and SU#2 such that the utilization rate of the SUs overall is equalized. User data is recorded in units of strips having a fixed length (1 [MB]). Further, these strips are striped by the order of use from segment #1 to #8.

Segments for a VDISK are assigned to LUNs in a SU that belongs to the same switch group G as the PU on which the VDISK is created. In other words, in the storage apparatus 100, the VDISK is created to not straddle switch groups G.

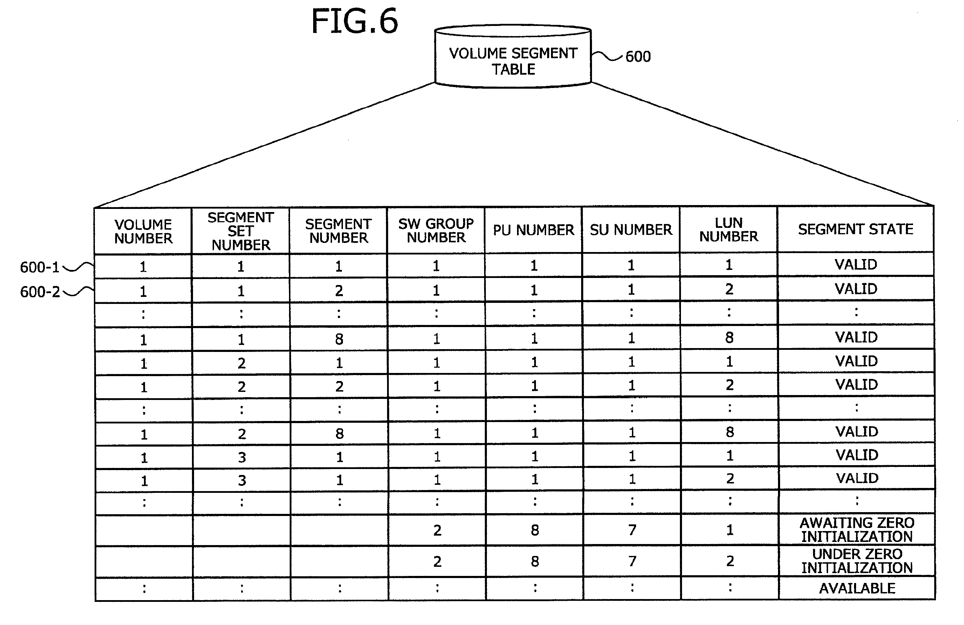

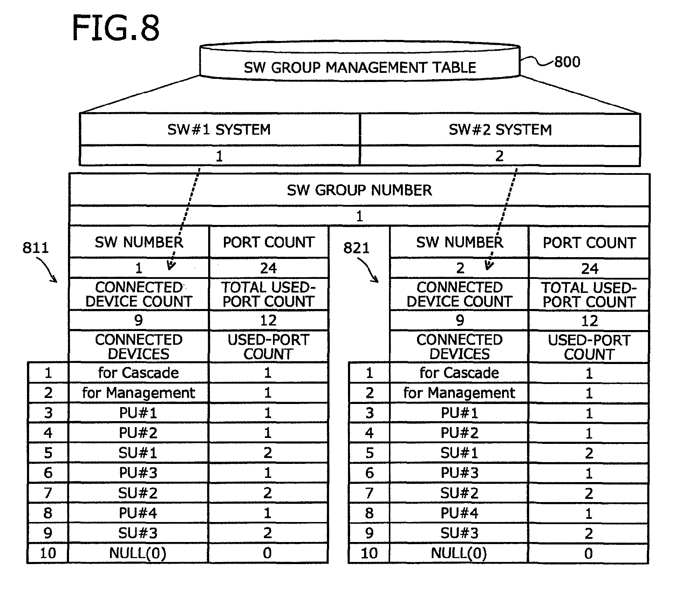

Contents of the configuration DB 200 depicted in FIG. 2 will be described. The configuration DB 200 includes, for example, a volume segment table 600 (refer to FIG. 6 hereinafter) and a SW group management table 800 (refer to FIG. 8 hereinafter). The volume segment table 600 and the SW group management table 800, for example, are read out from the configuration DB 200 to the memory 302 (refer to FIG. 3) and used by PU#1.

Here, the contents of the volume segment table 600 will be described.

FIG. 6 is a diagram depicting one example of the contents of the volume segment table 600. In FIG. 6, the volume segment table 600 has fields for volume numbers, segment set numbers, segment numbers, SW group numbers, PU numbers, SU numbers, LUN numbers, and segment states. By setting information into each of the fields, assignment information (e.g., assignment information 600-1, 600-2) is stored as records.

Here, the volume number is the identifier of a VDISK (volume) created on a PU in the storage apparatus 100. The segment set number is the identifier of a segment set forming the VDISK. The segment number is the identifier of a segment included in the segment set of the VDISK.

The SW group number is the identifier of the switch group G to which the PU on which the VDISK is created belongs and the SU that is assigned the segment forming the VDISK belongs. The PU number is the identifier of the PU operating the VDISK, i.e., the PU on which the VDISK is created. The SU number is the identifier of the SU to which the LUN belongs that is assigned the segment.

The LUN number is the identifier of the LUN to which the segment is assigned. The segment state is a state of the segment. For example, a state such as "available", "valid", "invalid", "awaiting zero initialization", and "under zero initialization" is set as a segment state. Here, an example of segment state transition will be described.

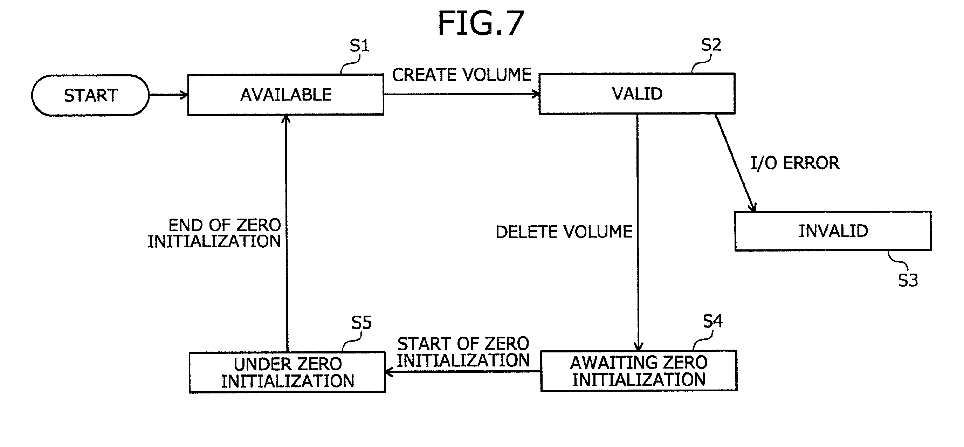

FIG. 7 is a diagram depicting an example of segment state transition. In FIG. 7, the segment state of a given segment to form a volume (VDISK) is depicted. The segment state of the segment is "available" in the initial state (in FIG. 7, "S1"). If this segment is used to make the volume, the segment state transitions to "valid" (in FIG. 7, "S2").

If an I/O error occurs for this segment, the segment state transitions to "invalid" (in FIG. 7, "S3"). In this case, disk replacement is performed and until the I/O error is resolved, this segment is not used. Further, if the volume formed by this segment is deleted, the segment state transitions to "awaiting zero initialization" (in FIG. 7, "S4"). "Awaiting zero initialization" indicates a state of waiting for execution of the zero initialization process.

If the zero initialization process is started with respect to this segment, the segment state transitions to "under zero initialization" (in FIG. 7, "S5"). "Under zero initialization" indicates that that the zero initialization process is under execution. When the zero initialization process for this segment ends, the segment state transitions to "available" (in FIG. 7, "S1").

The contents of the SW group management table 800 will be described.

FIG. 8 is a diagram depicting an example of the contents of the SW group management table 800. In FIG. 8, the SW group management table 800 includes SW group management information (e.g., SW group management information 811) of the SWs in a SW#1 system and SW group management information (e.g., SW group management information 821) of the SWs in a SW#2 system.

The SW#1 system is SW#1 and the SWs connected forming cascade topology; the SW#2 system is SW#2 and the connected SWs forming cascade topology. The contents of the SW group management table 800 depicted in FIG. 8 are the contents stored when the storage apparatus 100 is configured by three nodes (base node N1: PU#1, PU#2+SU#1; expansion node N2: PU#3+SU#2; expansion node N3: PU#4+SU#3).

The SW group management information indicates the SW group number, the SW number, the port count, the connected device count, and the total used-port count. The SW group number is the identifier of the switch group G. The SW number is the identifier of the SW. The port count is the number of ports that the SW has. The connected device count is the number of devices (PU, SU, etc.) connected to the SW. The total used-port count is the total number of ports that are in use.

Further, the SW group management information correlates and indicates the connected devices and the used-port count. A connected device is a device that is connected to the SW. The used-port count is the number of ports that are used for connecting the connected devices. Two ports among the ports of the SW are reserved for SW connection to form the cascade topology (for Cascade) and for SW management (for Management).

For example, the SW group management information 811 indicates that the SW group number of SW#1 is "1"; the SW number is "1"; the port count is "24"; the connected device count is "9"; and the total used-port count is "12". Further, for example, the SW group management information 811 indicates that the used-port count is "1" for the connected device "PU#1" and the used-port count is "2" for the connected device "SU#1". "NULL(0)" for the connected device indicates that unused ports are present.

An example of updating of the SW group management table 800 will be described. Here, a case where the storage apparatus 100 is expanded from a 3-node configuration to a 7-node configuration (for example, refer to (B) in FIG. 4) will be taken as an example to describe updating of the SW group management table 800.

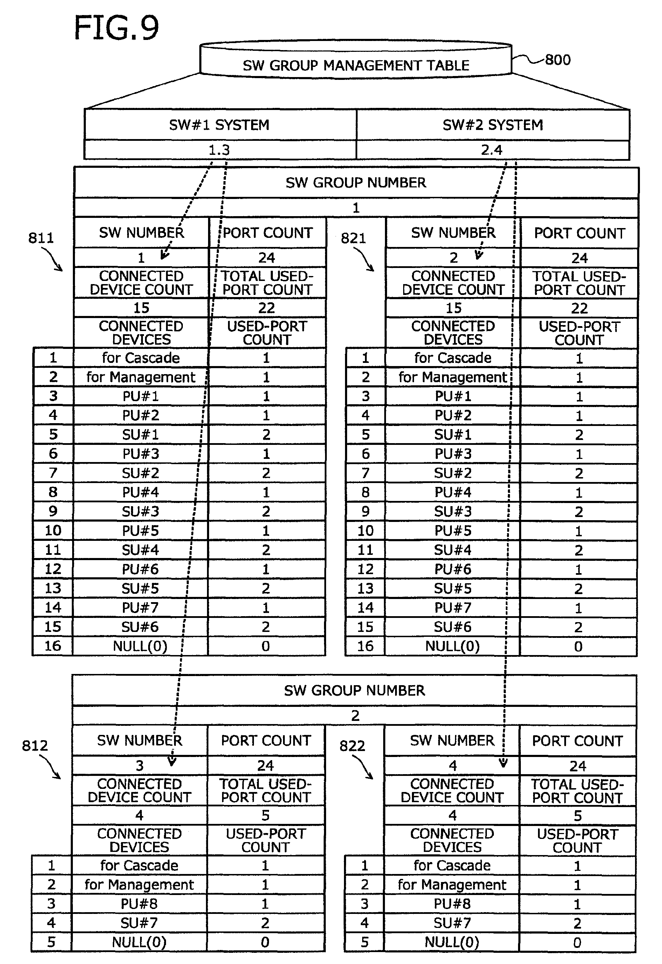

FIG. 9 is a diagram depicting an example of updating of the SW group management table 800. In FIG. 9, the SW group management table 800 includes the SW group management information 811 and 812 for SW#1 and SW#3 of the SW#1 system, and the SW group management information 821 and 822 for SW#2 and SW#4 of the SW#2 system.

Here, with respect to the port count "24" for SW#1 and SW#2, total used-port count is "22" and therefore, the "port count=3" for the expansion unit "PU×1+SU×1" cannot be covered. Consequently, in the storage apparatus 100, SW#3 and SW#4 are added; and in the SW group management table 800, the SW group management information 812 and 822 for SW#3 and SW#4 is newly created.

For example, the SW group management information 812 indicates that the SW group number of SW#3 is "2"; the SW number is "3"; the port count is "24"; the connected device count is "4"; and the total used-port count is "5". Further, for example, the SW group management information 812 indicates that the used-port count is "1" for a connected device PU#8" and the used-port count is "2" for a connected device "SU#7".

The contents of an asynchronous process management table 1000 used by PU#1 operating as the master control unit that controls the storage apparatus overall will be described. The asynchronous process management table 1000 is stored in the memory 302 (refer to FIG. 3) of PU#1, for example.

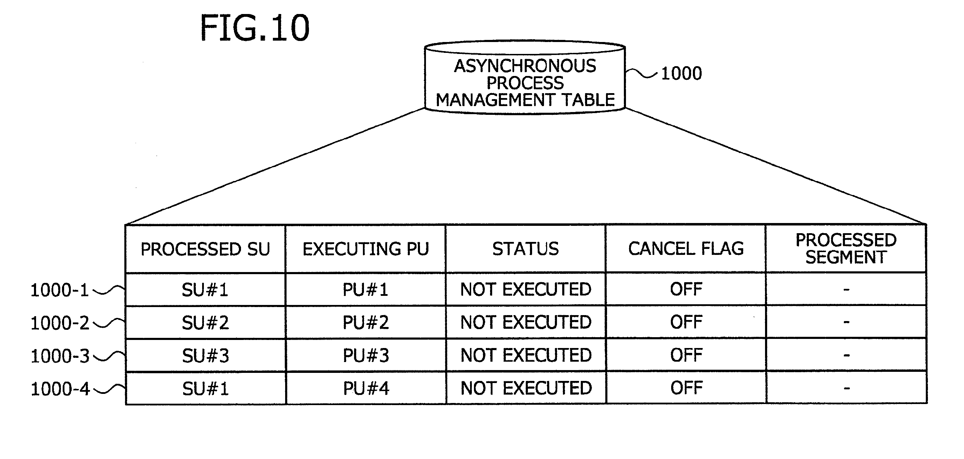

FIG. 10 is a diagram depicting one example of the contents of the asynchronous process management table 1000. In FIG. 10, the asynchronous process management table 1000 has fields for processed SUs, executing PUs, status, cancel flags, and processed segments. By setting information into each of the fields, asynchronous process management information (e.g., asynchronous process management information 1000-1 to 1000-4) is stored as records.

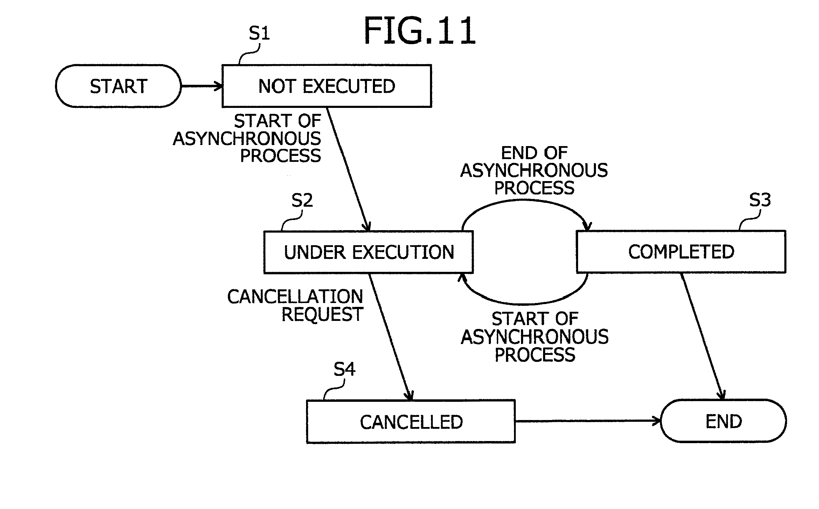

Here, the processed SU is information (e.g., SU number) that identifies the SU that is subject to the zero initialization process. The executing PU is information that identifies (e.g., PU number) the PU that is the executing agent of the zero initialization process. The status indicates the state of the zero initialization process with respect to the processed segment. An example of transition of the status will be described hereinafter with reference to FIG. 11.

The cancel flag is information that indicates whether the zero initialization process under execution with respect to the processed segment is canceled. When the cancel flag is "OFF", the zero initialization process under execution is not canceled. On the other hand, when cancel flag is "ON", the zero initialization process under execution is canceled. The processed segment is information (e.g., address information) that identifies the segment subject to the zero initialization.

For example, the asynchronous process management information 1000-1 indicates that the processed SU is "SU#1"; the executing PU is "PU#1"; the status is "not executed"; the cancel flag is "OFF"; and the processed segment is "-". "-" for the processed segment indicates that the segment to be subject to the zero initialization has not been set.

A transition example of the status of the zero initialization process will be described.

FIG. 11 is a diagram depicting a transition example of the status of the zero initialization process. In FIG. 11, the status of the zero initialization process for a processed segment is depicted. The status of the zero initialization process is "not executed" in the initial state (in FIG. 11, "S1"). When the execution of the zero initialization process starts, the status transitions to "under execution" (in FIG. 11, "S2").

When the execution of the zero initialization process ends, the status transitions to "completed" (in FIG. 11, "S3"). If the zero initialization process is canceled during execution, the status transitions to "canceled" (in FIG. 11, "S4"). When the execution of the zero initialization process ends or the zero initialization process is canceled during execution, the record of the processed segment is deleted from the asynchronous process management table 1000.

A functional configuration of PU#1 operating as the master control unit that controls the storage apparatus overall will be described.

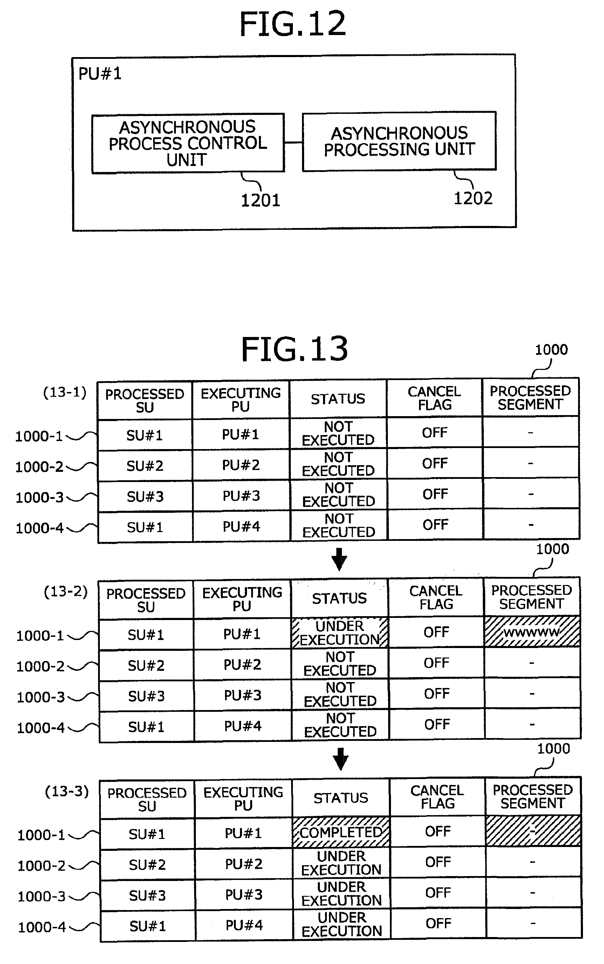

FIG. 12 is a block diagram of an example of a functional configuration of PU#1. In FIG. 12, PU#1 includes an asynchronous process control unit 1201 and an asynchronous processing unit 1202. The asynchronous process control unit 1201 and the asynchronous processing unit 1202 are functions forming a control unit and for example, functions thereof are implemented by executing on the CPU 301, a programs stored in the memory 302 depicted in FIG. 3 or by the I/F 303. Process results of the functional units are stored to the memory 302, for example.

The asynchronous process control unit 1201 has a function of obtaining the performance information of SU#i. Here, the performance information for SU#i is information that indicates the response performance for accessing SU#i. For example, the performance information for SU#i includes input output per second (IOPS), which indicates the number of I/O requests that can be processed by SU#i in one second.

The IOPS of SU#i is measured by SU#i, for example. For instance, an obtaining unit obtains the performance information for SU#i by making an enquiry to SU#i. The performance information obtained for SU#i is correlated with an identifier of SU#i (e.g., SU number) and stored to the memory 302.

Further, the asynchronous process control unit 1201 has a function of obtaining load information of PU#j. Here, the load information of PU#j is information that indicates the load on PU#j. For example, load information of PU#j includes the CPU utilization rate of PU#j, the data transmission volume corresponding to I/O requests from the higher level apparatuses SV (refer to FIG. 1), such as a business server, etc.

The CPU utilization rate of PU#j and the data transmission volume are measured by PU#j, for example. For instance, an obtaining unit obtains the load information of PU#j by making an enquiry to PU#j. The obtained load information of PU#j is correlated with an identifier of PU#j (e.g., PU number) and stored to the memory 302.

The asynchronous process control unit 1201 has a function of controlling according to the obtained performance information for SU#i, the execution of the zero initialization process with respect to a given segment in SU#i. Here, the given segment is a segment that is in SU#i and to be subject to zero initialization.

For example, the asynchronous process control unit 1201 identifies the response time for an I/O request to SU#i by obtaining the inverse of the IOPS included in the performance information for SU#i. In the description hereinafter, the response time for an I/O request to SU#i may be indicated simply as "I/O response time for SU#i".

If the identified I/O response time for SU#i is less than the threshold T1, the asynchronous process control unit 1201 controls the asynchronous processing unit 1202 and starts the execution of the zero initialization process with respect to the given segment. The threshold T1 is preliminarily set and stored in the memory 302. For example, the threshold T1 is set to a value on the order of 10 [ms].

The asynchronous process control unit 1201 has a further function of controlling according to the obtained load information of PU#j, the execution of the zero initialization process for the given segment by PU#j. For example, the asynchronous process control unit 1201 controls the asynchronous processing unit 1202 and from among the PUs in the storage apparatus 100, determines the PU#j having the smallest load identified by the load information, to be the executing PU.

Here, the executing PU is the PU that executes the zero initialization process with respect to the given segment. The load identified by the load information of PU#j, for example, is the CPU utilization rate of PU#j and/or the data transmission volume. The asynchronous process control unit 1201 controls the asynchronous processing unit 1202, and starts the execution of the zero initialization process for the given segment by the executing PU.

The asynchronous processing unit 1202 has a function of starting the execution of the zero initialization process with respect to the given segment. For example, the asynchronous processing unit 1202 refers to the volume segment table 600 (refer to FIG. 6), and as the given segment, identifies in SU#i, a segment whose segment state is "awaiting zero initialization".

The asynchronous processing unit 1202 requests the executing PU to execute the zero initialization process with respect to the given segment. As a result, by an agent A of the executing PU, an asynchronous process thread is generated and the zero initialization process is executed with respect to the given segment. The asynchronous process thread is a thread for executing the zero initialization process.

If the I/O response time for SU#i exceeds the threshold T2 during the execution of the zero initialization process for the given segment in SU#i, the asynchronous process control unit 1201 performs control to terminate the execution of the zero initialization process. The threshold T2 is preliminarily set and stored in the memory 302. For example, the threshold T2 is a value on the order of 20 [ms].

For example, if I/O response time for SU#i exceeds the threshold T2, the asynchronous process control unit 1201 sends a cancellation request to the asynchronous processing unit 1202. The cancellation request requests the termination of the execution of the zero initialization process with respect to the given segment in SU#i.

Further, the asynchronous processing unit 1202, upon receiving the cancellation request, sends a cancellation request to the executing PU. The cancellation request requests the termination of the execution of the zero initialization process with respect to the given segment in SU#i. As a result, by the agent A of the executing PU, a cancel process is performed and the execution of the zero initialization process with respect to the given segment is terminated.

The asynchronous process control unit 1201 has a function of grouping PUs and SUs directly connected to SWs, if the SWs connecting the PUs and SUs in the storage apparatus 100 are connected to form cascade topology. Results of the grouping are stored to the SW group management table 800 depicted in FIG. 8, for example.

The asynchronous process control unit 1201 has a function of causing a PU#j belonging to the switch groups G to execute the zero initialization process with respect to the given segment in SU#i belonging to the switch groups G. For example, the asynchronous process control unit 1201 determines among the PUs belonging to the switch groups G, the PU#j having the smallest load identified by the load information, to be the executing PU.

An example of asynchronous process control using the asynchronous process management table 1000 depicted in FIG. 10 will be described. Description will be given taking an example where the storage apparatus 100 has a 3-node configuration (base node N1: PU#1, PU#2+SU#1; expansion node N2: PU#3+SU#2; and expansion node N3: PU#4+SU#3).

FIG. 13 is a diagram (part 1) depicting an example of updating of the asynchronous process management table 1000. The asynchronous process control unit 1201 creates the asynchronous process management table 1000 (refer to (13-1) in FIG. 13), when a given segment to be subject to processing and in a SU in the storage apparatus 100 is present.

When the asynchronous process management table 1000 is created, the asynchronous process control unit 1201 creates the asynchronous process management information 1000-1 to 1000-4 such that the multiplicity of the zero initialization process respectively executed by PU#1 to PU#4 in the storage apparatus 100 is "1". At this point in time, the given segment has not been set.

Here, the asynchronous process control unit 1201 is assumed to control the asynchronous processing unit 1202 and start the execution of the zero initialization process with respect to the given segment in SU#1. In this case, the asynchronous processing unit 1202 refers to the volume segment table 600 and identifies as the given segment, a segment whose segment state is "awaiting zero initialization".

The asynchronous processing unit 1202 sets "address information (in the example in FIG. 13, wwwww)" of the identified given segment into the processed segment field of the asynchronous process management information 1000-1. The asynchronous processing unit 1202 further requests PU#1 to execute the zero initialization process with respect to the given segment and sets "under execution" in the status field of the asynchronous process management information 1000-1 (refer to (13-2) in FIG. 13).

The execution of the zero initialization process with respect to the given segment in SU#1 is assumed to be completed. In this case, the asynchronous processing unit 1202 sets "completed" in the status field of the asynchronous process management information 1000-1 and sets "-" in the processed segment field (refer to (13-3) in FIG. 13).

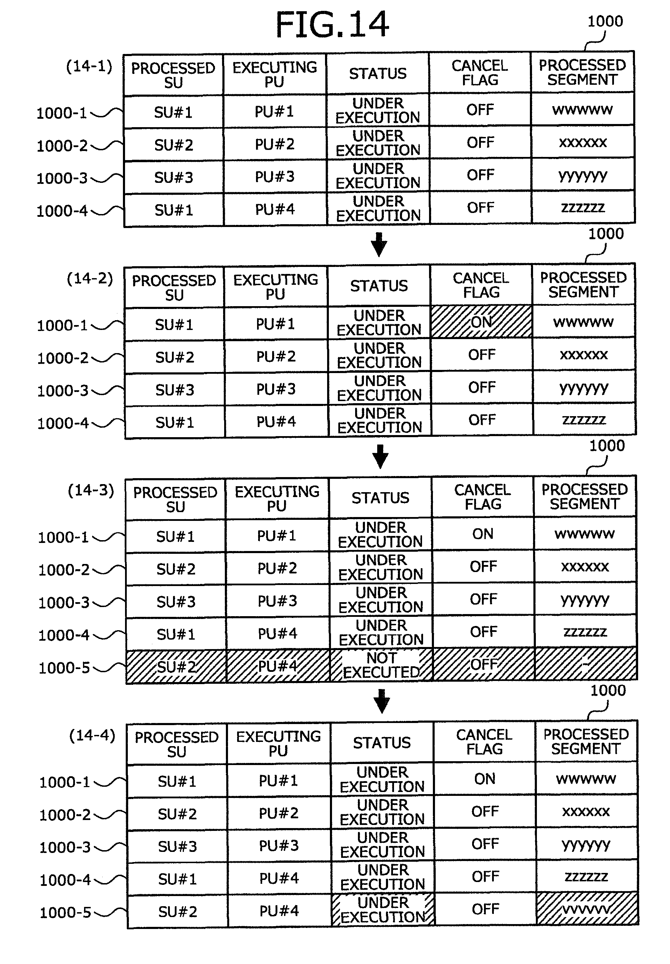

FIG. 14 is a diagram (part 2) depicting an example of updating of the asynchronous process management table 1000. The zero initialization process for given segments to be processed in SU#1 to SU#3 is equally distributed among PU#1 to PU#4 and under execution (refer to (14-1) in FIG. 14).

Here, the I/O response time for SU#1 is assumed to exceed the threshold T2 during the execution of the zero initialization process for a given segment in SU#1. In this case, the asynchronous process control unit 1201 sets to "ON", the cancel flag field of the asynchronous process management information 1000-1 for the given segment in SU#1 for which the zero initialization process is under execution in (refer to (14-2) in FIG. 14).

The asynchronous process control unit 1201 sends to the asynchronous processing unit 1202, a cancellation request requesting termination of the execution of the zero initialization process for the given segment in SU#1. The asynchronous processing unit 1202, in response to the received cancellation request, sends a cancellation request to the executing PU.

A case where the I/O response time for SU#2 is less than the threshold T1 is assumed. Further, among PU#1 to PU#4, the PU having the smallest load is assumed to be PU#4. In this case, to start the execution of the zero initialization process by PU#4 with respect to a given segment in SU#2, the asynchronous process control unit 1201 adds asynchronous process management information 1000-5 to the asynchronous process management table 1000 (refer to (14-3) in FIG. 14).

As a result, the asynchronous processing unit 1202 refers to the volume segment table 600 and identifies, as the given segment, a segment that is in SU#2 and whose segment state is "awaiting zero initialization". Here, a case is assumed where a segment whose address information is "vvvvvv" is identified as the given segment.

In this case, the asynchronous processing unit 1202 sets "address information (vvvvvv)" of the identified given segment into the processed segment field of the asynchronous process management information 1000-5. The asynchronous processing unit 1202 requests PU#4 to execute the zero initialization process with respect to the processed segment and sets "under execution" into the status field of the asynchronous process management information 1000-5 (refer to (14-4) in FIG. 14).

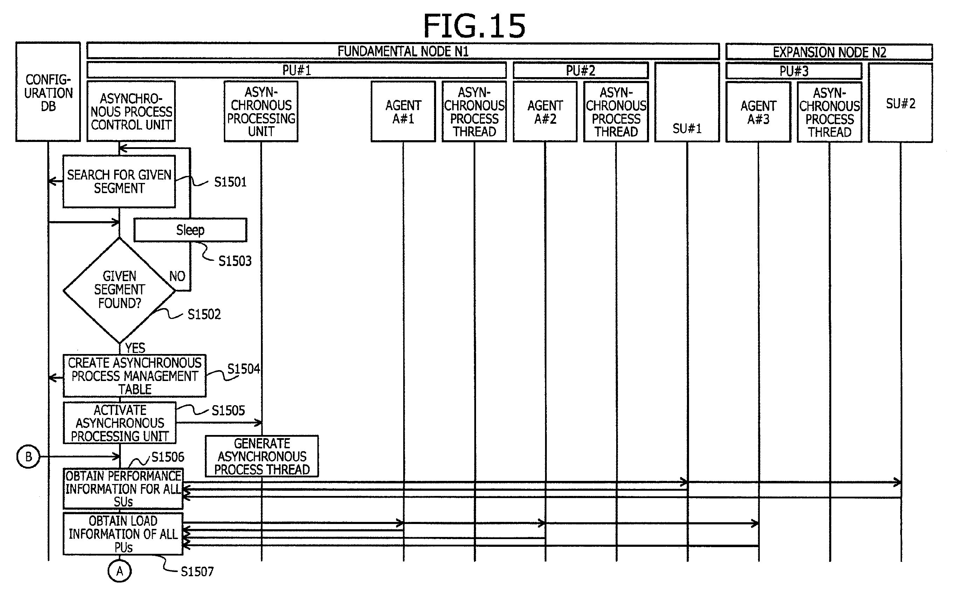

Various process procedures of the storage apparatus 100 according to the second embodiment will be described with reference to FIG. 15 to FIG. 18. Nonetheless, in FIG. 15 to FIG. 18, description will be given taking an example where the storage apparatus 100 has a 2-node configuration (base node N1: PU#1, PU#2+SU#1; and expansion node N2: PU#3+SU#2).

A procedure of an asynchronous process control process by the asynchronous process control unit 1201 of the storage apparatus 100 will be described.

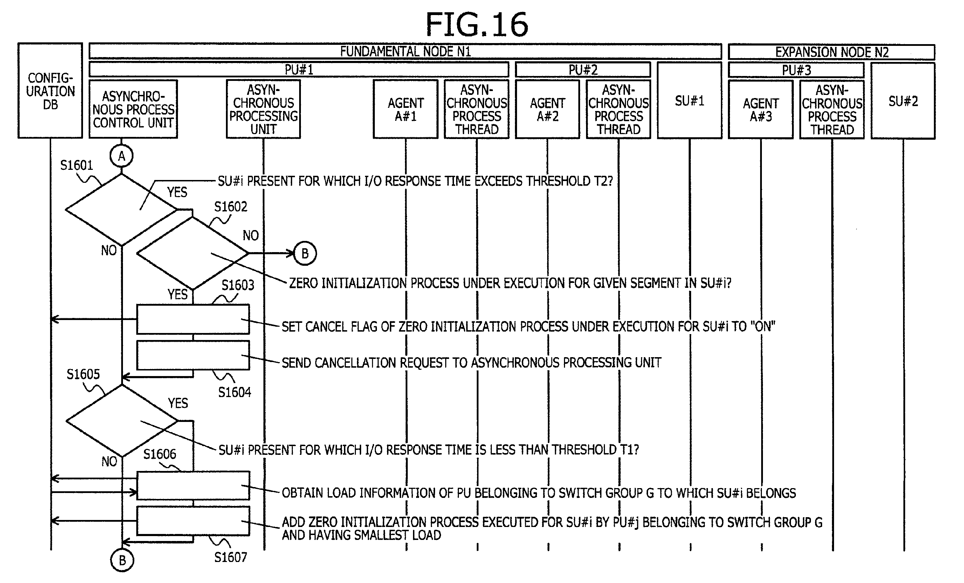

FIG. 15 and FIG. 16 are flowcharts depicting an example of a procedure of the asynchronous process control process by the storage apparatus 100. In the flowchart depicted in FIG. 15, the asynchronous process control unit 1201 refers to the volume segment table 600 and searches for a given segment whose segment state is "awaiting zero initialization" (step S1501).

The volume segment table 600 is read from the configuration DB 200 of SU#1 to the memory 302 and used, for example.

The asynchronous process control unit 1201 determines whether a given segment whose segment state is "awaiting zero initialization" has been found (step S1502). Here, if no such segment is found (step S1502: NO), the asynchronous process control unit 1201 sleeps for a given period (step S1503), and returns to step S1501.

On the other hand, if a given segment whose segment state is "awaiting zero initialization" is found (step S1502: YES), the asynchronous process control unit 1201 creates the asynchronous process management table 1000 (step S1504). For example, the asynchronous process control unit 1201 creates the asynchronous process management table 1000 such that the multiplicity of the zero initialization process executed by each PU#j in the storage apparatus 100 is "1". Nonetheless, at this point in time, the given segment has not been set.

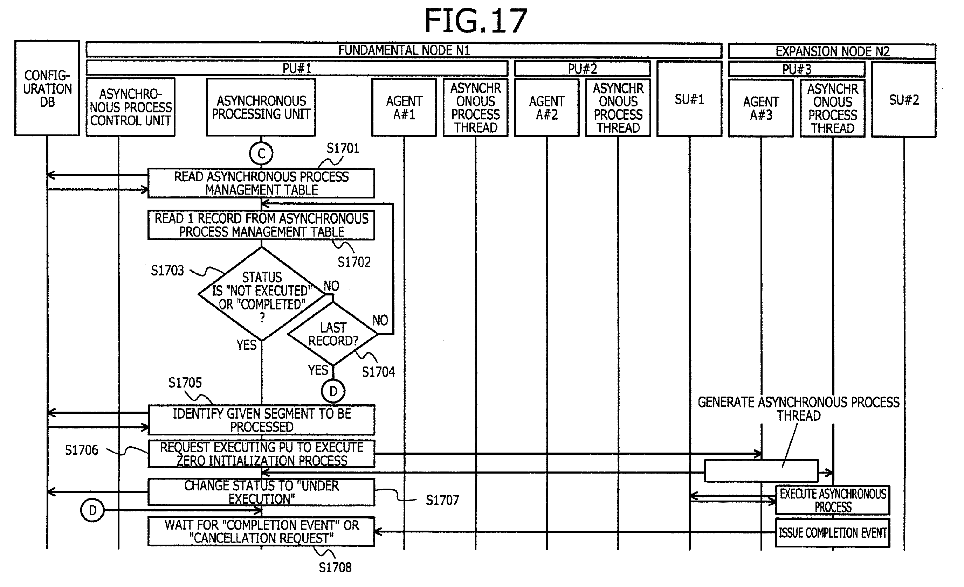

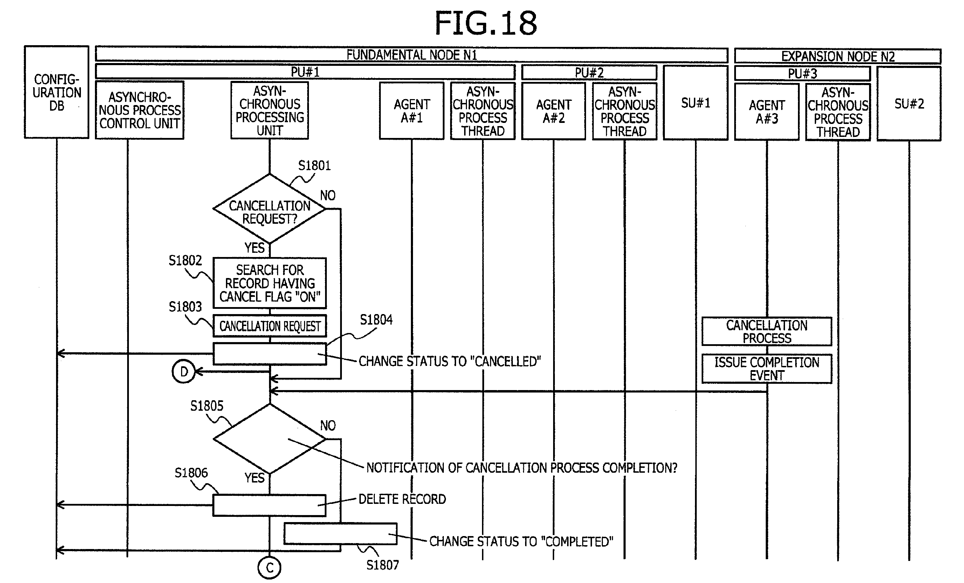

The asynchronous process control unit 1201 activates the asynchronous processing unit 1202 (step S1505). As a result, an asynchronous process thread is generated by the asynchronous processing unit 1202. Details of the processing by the asynchronous processing unit 1202 will be described hereinafter with reference to FIG. 17 and FIG. 18.

The asynchronous process control unit 1201 obtains the performance information for all SUs in the storage apparatus 100 (step S1506). The asynchronous process control unit 1201 obtains the load information of all PUs in the storage apparatus 100 (step S1507), and transitions to step S1601 in FIG. 16.

In the flowchart depicted in FIG. 16, the asynchronous process control unit 1201 refers to the performance information for all the SUs, and determines whether a SU#i is present for which the I/O response time exceeds the threshold T2 (step S1601). Here, if no SU#i is present for which the I/O response time exceeds the threshold T2 (step S1601: NO), the asynchronous process control unit 1201 transitions to step S1605.

On the other hand, if a SU#i is present for which the I/O response time exceeds the threshold T2 (step S1601: YES), the asynchronous process control unit 1201 determines whether the zero initialization process is under execution with respect to a given segment in the SU#i for which the I/O response time exceeded the threshold T2 (step S1602).

Here, if the zero initialization process is not under execution (step S1602: NO), the asynchronous process control unit 1201 returns to step S1506 in FIG. 15.

On the other hand, if the zero initialization process is under execution (step S1602: YES), the asynchronous process control unit 1201 sets to "ON", the cancel flag in the asynchronous process management table 1000 that corresponds to the zero initialization process that is under execution for the SU#i for which the I/O response time exceeded the threshold T2 (step S1603).

The asynchronous process control unit 1201 sends to the asynchronous processing unit 1202, a cancellation request requesting the termination of the execution of the zero initialization process for the given segment in the SU#i for which the I/O response time exceeded the threshold T2 (step S1604), and transitions to step S1605.

The asynchronous process control unit 1201 refers to the performance information for all the SUs and determines whether a SU#i is present for which the I/O response time is less than the threshold T1 (step S1605). Here, if no SU#i is present for which the I/O response time is less than the threshold T1 (step S1605: NO), the asynchronous process control unit 1201 transitions to step S1506 in FIG. 15.

On the other hand, if a SU#i is present for which the I/O response time is less than the threshold T1 (step S1605: YES), the asynchronous process control unit 1201 refers to the SW group management table 800 and obtains the load information of a PU that belongs to the switch group G to which the SU#i for which the I/O response time is less than the threshold T1 belongs (step S1606).

The asynchronous process control unit 1201 refers to the load information obtained for a PU that belongs to the switch group G, and adds the zero initialization process executed for the SU by the PU#j having the smallest load among the PUs belonging to the switch group G (step S1607), and returns to step S1506 in FIG. 15. Here, the SU is the SU#i for which the I/O response time is less than the threshold T1.

Thus, the asynchronous process executed internally based on volume access characteristics that become clearer after the start of actual operation can be controlled.

A procedure of the asynchronous process executed by the asynchronous processing unit 1202 of the storage apparatus 100 will be described.

FIG. 17 and FIG. 18 are flowcharts depicting an example of a procedure of the asynchronous process of the storage apparatus 100. In the flowchart depicted in FIG. 17, the asynchronous processing unit 1202 reads the asynchronous process management table 1000 (step S1701). The asynchronous processing unit 1202 reads one record from the asynchronous process management table 1000 (step S1702).

The asynchronous processing unit 1202 determines if the status of the read record is "not executed" or "completed" (step S1703). Here, if the status is neither "not executed" or "completed" (step S1703: NO), the asynchronous processing unit 1202 determines whether the read record is the last record (step S1704).

Here, if the read record is the last record (step S1704: YES), the asynchronous processing unit 1202 transitions to step S1708. On the other hand, if the read record is not the last record (step S1704: NO), the asynchronous processing unit 1202 returns to step S1702.

At step S1703, if the status is "not executed" or "completed" (step S1703: YES), the asynchronous processing unit 1202 refers to the volume segment table 600, identifies a given segment that is to be processed and in the processed SU, and sets address information into the processed segment field of corresponding record in the asynchronous process management table 1000 (step S1705).

The asynchronous processing unit 1202 requests the executing PU to execute the zero initialization process with respect to the given segment (step S1706). The asynchronous processing unit 1202 sets "under execution" into the status field of the corresponding record in the asynchronous process management table 1000 (step S1707).

As a result, by an agent of the executing PU, an asynchronous process thread is generated and the asynchronous process (zero initialization process) is executed. When the execution of the asynchronous process (zero initialization process) ends, a completion event is issued from the executing PU to the asynchronous processing unit 1202.

The asynchronous processing unit 1202 awaits the receipt of a "completion event" or "cancellation request" (step S1708), and transitions to step S1801 in FIG. 18. The completion event is an event indicating that the execution of the zero initialization process for the given segment has been completed.

In the flowchart depicted in FIG. 18, the asynchronous processing unit 1202 determines whether a cancellation request has been received from the asynchronous process control unit 1201 (step S1801). Here, if a cancellation request has not been received (step S1801: NO), the asynchronous processing unit 1202 transitions to step S1805.

On the other hand, if a cancellation request has been received (step S1801: YES), the asynchronous processing unit 1202 searches the asynchronous process management table 1000, for a record in which the cancel flag is "ON" (step S1802). The asynchronous processing unit 1202 sends to the executing PU indicated in the retrieved record, a cancellation request requesting the termination of the execution of the zero initialization process for the given segment (step S1803).

The asynchronous processing unit 1202 sets "canceled" into the status field of the retrieved record (step S1804), and returns to step S1708 in FIG. 17. As a result, a cancellation process of terminating the execution of the asynchronous process (zero initialization process) is executed by an agent of the executing PU. When the execution of the cancellation process ends, a completion event is issued from the executing PU to the asynchronous processing unit 1202.

At step S1805, the asynchronous processing unit 1202 determines whether a completion event for the cancellation process has been received (step S1805).

Here, if a completion event for the cancellation process has been received (step S1805: YES), the asynchronous processing unit 1202 deletes the corresponding record in the asynchronous process management table 1000 (step S1806), and returns to step S1701 in FIG. 17. The corresponding record is the record that corresponds to the given segment for which the cancellation process was executed.

On the other hand, if no completion event for the asynchronous process (zero initialization process) has been received (step S1805: NO), the asynchronous processing unit 1202 sets "completed" into the status field of the corresponding record in the asynchronous process management table 1000 (step S1807), and returns to step S1701 in FIG. 17.

As described, the storage apparatus 100 according to the second embodiment enables performance information that indicates the response performance for accessing SU#i to be obtained and the execution of the zero initialization process for a given segment in SU#i to be controlled based on the obtained performance information.

Consequently, the asynchronous process executed internally based on volume access characteristics that become clearer after the start of actual operation can be controlled, enabling the effect of I/O requests from a business server to be suppressed and stable access performance to be provided to the business server.

The storage apparatus 100 can perform control to start the execution of the zero initialization process with respect to the given segment in SU#i, when the response time for accessing SU#i is less than the threshold T1.

Consequently, the zero initialization process can be preferentially performed for a SU#i for which the access frequency is low and therefore, has a low load, enabling internal processing to be executed efficiently. Furthermore, by preferentially performing the zero initialization process for a SU#i for which the utilization frequency is low and increasing the available capacity, the next time a VDISK is created, a segment of a SU having a large available capacity, i.e., the SU#i for which the utilization frequency is low can be preferentially assigned. As a result, biases in the access of SUs in the storage apparatus 100 can be distributed.

The storage apparatus 100 can perform control to terminate the execution of the zero initialization process, if during the execution of the zero initialization process, the response time for accessing SU#i exceeds the threshold T2. Consequently, the execution priority of the zero initialization process with respect to the SU#i for which the access frequency is high and therefore, has a high load can be reduced, enabling drops in the response performance for I/O requests from the business server to be suppressed.

The storage apparatus 100 obtains load information that indicates the load on PU#j and can control based on the load information, the execution of the zero initialization process by PU#j with respect to a given segment in SU#i. Consequently, concerning the PU#j that executes the zero initialization process, the execution of the zero initialization process by a PU#j for which the data transmission volume is high consequent to I/O requests from the business server can be prevented, enabling drops in the response performance for I/O requests from the business server to be suppressed.

The storage apparatus 100 can group the PUs and SUs directly connected to the switches SW, in a case where the switches are connected to form cascade topology. The storage apparatus 100 can cause a PU#j belonging to the switch groups G to execute the zero initialization process with respect to a given segment in a SU#i belonging to the switch groups G.

Thus, even if SWs are connected to form cascade topology accompanying scaleout of the storage apparatus 100, when the zero initialization process is executed, cascade paths between the SWs are not used, enabling performance deterioration consequent to insufficient bandwidth of the paths connecting the SWs in the cascade topology to be suppressed.

The control method described in the present embodiment may be implemented by executing a prepared program on a computer such as a personal computer and a workstation. The program is stored on a non-transitory, computer-readable recording medium such as a hard disk, a flexible disk, a CD-ROM, an MO, and a DVD, read out from the computer-readable medium, and executed by the computer. The program may be distributed through a network such as the Internet.

According to one aspect of the embodiments, stable data access performance can be provided to a higher level apparatus that uses the storage apparatus.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A storage control apparatus configured to control a storage unit (SU) in a storage apparatus (100), the storage control apparatus comprising:
memory configured to store assignment information (110) that includes an assignment state of memory areas of the storage unit (SU); and
a processor (301) configured to obtain performance information that indicates response performance for accessing the storage unit (SU), and configured to control based on the obtained performance information, execution of an initialization process for a memory area in the storage unit (SU), identified by the assignment information (110), and subject to initialization.

2. The storage control apparatus according to claim 1, wherein
the storage apparatus (100) includes a plurality of storage control apparatuses that control the storage unit (SU), and
the processor (301) obtains load information that indicates load on a storage control apparatus included among the plurality of storage control apparatuses and based on the obtained load information, controls execution of the initialization process by the storage control apparatus.

3. The storage control apparatus according to claim 2, wherein
the processor (301) performs control to start the execution of the initialization process, when the response time identified by the performance information and for accessing the storage unit (SU) is less than a first threshold.

4. The storage control apparatus according to claim 3, wherein
the processor (301) performs control to terminate the execution of the initialization process, when the response time identified by the performance information and for accessing the storage unit (SU) exceeds a second threshold during the execution of the initialization process.

5. The storage control apparatus according to claim 3 or 4, wherein
the processor (301) performs control to start the execution of the initialization process by the storage control apparatus that is identified by the load information to have a load that is smallest among the plurality of storage control apparatuses.

6. The storage control apparatus according to any one of claims 2 to 5, wherein
when switches connecting storages (SU) and storage control apparatuses (PU) in the storage apparatus (100) are connected to form cascade topology, the processor (301) groups for each switch, the storage control apparatuses and the storages (SU) directly connected to the switch and for each group, causes a storage control apparatus in the group to execute the initialization process for a memory area that is to be initialized and is in a storage unit (SU) that belongs to the group.

7. The storage control apparatus according to claim 6, wherein
the processor (301) performs control to start the execution of the initialization process by the storage control apparatus that is identified by the load information to have a load that is smallest among the storage control apparatuses belonging to the group.

8. The storage control apparatus according to any one of claims 1 to 7, wherein
the assignment information (110) includes an assignment state of segments forming a volume and assigned to the memory areas of the storage unit (SU).

9. The storage control apparatus according to claim 2, wherein
the load information indicates for the storage control apparatus, a data transmission volume that corresponds to input/output requests from a higher level apparatus.

10. A storage apparatus (100) comprising
a storage unit (SU); and
a storage control apparatus that controls the storage unit (SU), wherein
the storage control apparatus includes:
memory configured to store assignment information (110) that includes an assignment state of memory areas of the storage unit (SU), and
a processor (301) configured to obtain performance information that indicates response performance for accessing the storage unit (SU), and configured to control based on the obtained performance information, execution of an initialization process for a memory are in the storage unit (SU), identified by the assignment information (110), and subject to initialization.

11. A control program causing a storage control apparatus that controls a storage unit (SU) in a storage apparatus (100) to execute a process comprising:
obtaining performance information that indicates response performance for accessing the storage unit (SU); and
controlling based on the obtained performance information, execution of an initialization process for a memory area in the storage unit (SU), subject to initialization, and identified by assignment information (110) that includes an assignment state of memory areas in the storage unit (SU).
